# NEUE EUROPÄISCHE PATENTSCHRIFT

(11) **EP 3 346 068 B2**
(45) Veröffentlichungstag und Bekanntmachung des Hinweises auf die Entscheidung über den Einspruch: **21.08.2024**
(45) Hinweis auf die Patenterteilung: 30.09.2020
(21) Anmeldenummer: 17150725.4
(22) Anmeldetag: 09.01.2017
(51) Int. Cl.: B29L 31/26, B29L 31/00, B29K 105/04, B29K 75/00, B29K 105/00, B29C 44/56, E04B 1/68, E06B 1/62, C08J 9/40

(54) **FUGENDICHTUNGSBAND UMFASSEND EINEN SCHAUMSTOFF**
FOAM AND JOINT SEALING STRIP COMPRISING SUCH A FOAM
MOUSSE ET BANDE DE JOINT D'ÉTANCHÉITÉ, COMPRENANT UNE TELLE MOUSSE

(30) Priorität: 06.01.2017 EP 17150527
(43) Veröffentlichungstag der Anmeldung: 11.07.2018
(73) Patentinhaber: Hanno-Werk GmbH & Co. KG, 30880 Laatzen (DE)
(72) Erfinder: Kethorn, Björn, 48346 Ostbevern (DE)
(74) Vertreter: Meissner Bolte Partnerschaft mbB

(56) Entgegenhaltungen:
- EP-A1- 2 706 159
- EP-A2- 0 507 463
- WO-A1-2016/171558
- DE-A1- 102010 016 991
- DE-U1- 202012 000 883
- DE-U1- 202013 104 268
- US-A1- 2011 311 802
- US-A1- 2012 022 175

## Beschreibung

Die Erfindung betrifft ein Fugendichtungsband, das einen Schaumstoff aufweist.

Komprimierbaren Fugendichtungsbänder, die einen Schaumstoff aufweisen, sind zum Abdichten insbesondere gegen Luftzug und Schlagregen beispielsweise aus der DE 19641415 C2, der DE 20009674 U1 oder der WO 2012/167762 A1 bekannt und werden in der Bautechnik zum Abdichten insbesondere von Bauteilen, beispielsweise von Fenster- und Türrahmen, gegenüber einem Mauerwerk, beispielsweise einer Gebäudewandöffnung, oder einer Bewegungsfuge in einer Fassade verwendet. Vorgenannte Fugendichtungsbänder weisen wenigstens eine Membranschicht auf. Weitere Fugendichtungsbänder, die keine Membranschicht aufweisen, sind beispielsweise aus der DE 1 000 946 A, DE 40 20 230 A1 oder der DE 34 07 995 A1 bekannt. DE 20 2012 000883 U1 offenbart ein Fugendichtungsband umfassend einen Schaumstoff, wobei der Schaumstoff mit wenigstens einer Substanz ausgerüstet ist, wobei der Schaumstoff mit einer Imprägniermasse imprägniert ist.

Ein bekanntes Fugendichtungsband, das einen Schaumstoff umfasst, weist zwei Längsseiten sowie eine im Einbauzustand des Fugendichtungsbandes an die eine Fugenflanke, insbesondere eines Mauerwerks, angrenzende Oberseite und eine im Einbauzustand des Fugendichtungsbandes an die gegenüberliegende Fugenflanke, insbesondere des Bauteils, angrenzende Unterseite auf. Zwischen der Oberseite und Unterseite parallel bzw. nahezu parallel zu den Längsseiten können eine oder vorzugsweise mehrere Membranschichten jeweils in Längsrichtung verlaufen. Bekanntermaßen wird die Unterseite eines solchen Fugendichtungsbandes an dem abzudichtenden Bauteil, beispielsweise einem Fenster- und Türrahmen, angeklebt. Nach dem Einbau des Bauteils, beispielsweise in eine Gebäudewandöffnung, expandiert das zuvor komprimierte Fugendichtungsband, stellt sich also elastisch zurück, so dass die Oberseite des Fugendichtungsbandes am Mauerwerk der Gebäudewandöffnung angrenzt bzw. anliegt, und so das Bauteil am Mauerwerk der Gebäudewandöffnung abdichtet. Gattungsgemäße Fugendichtungsbänder werden zur Abdichtung auch in Fassadenfugen, insbesondere in Bestandsfugen, eingebracht.

Ausgehend von diesem Stand der Technik liegt der Erfindung die grundsätzliche Aufgabe zugrunde, solche Fugendichtungsbänder, aber auch Bestandteile davon, derart weiterzuentwickeln, dass sie die an sie gestellten Anforderungen hinsichtlich der Schlagregendichtheit, der Dampfdiffusionsoffenheit, der Wärmedämmung, der Luftdichtheit und/oder des Brandschutzes besser erfüllen.

Diese Aufgabe wird wenigstens teilweise mit einem Fugendichtungsband, das die in Anspruch 1 genannten Merkmale aufweist, gelöst. Weiterbildungen und vorteilhafte Ausgestaltungen der Erfindung ergeben sich aus der nachfolgenden Beschreibung sowie den Unteransprüchen.

Erfindungsgemäß ist vorgesehen, dass der Schaumstoff mit wenigstens einer Substanz ausgerüstet ist, die die Wärmleitfähigkeit des Schaumstoffs oder die Wärmeleitfähigkeit des den Schaumstoff aufweisenden Fugendichtungsbandes herabsetzt.

Eine Herabsetzung bzw. Verminderung der Wärmeleitfähigkeit bedeutet eine Verbesserung der Wärmedämmeigenschaften und so einen Wärmedämmeffekt. Die Wärmedämmung eines die wenigstens eine Substanz aufweisenden Schaumstoffs oder eines diesen aufweisenden Fugendichtungsbandes ist also besser als die Wärmedämmung eines die wenigstens eine Substanz nicht aufweisenden Schaumstoffs oder eines diesen nicht aufweisenden Fugendichtungsbandes. Die Anwendung eines die wenigstens eine Substanz aufweisenden Schaumstoffs oder eines diesen aufweisenden Fugendichtungsbandes in Fugen verbessert die Wärmeisolierung und vermeidet eine Wärmebrücke durch die Fuge.

Bekannte Schaumstoffe oder Schaumstoff umfassende Fugendichtungsbänder, die die wenigstens eine Substanz nicht aufweisen, haben in der Regel im komprimierten Zustand aufgrund der Verkleinerung des innerhalb des Schaumstoffs vorhandenen Porenräume eine höhere Wärmeleitfähigkeit als im unkomprimierten Zustand. Schaumstoffe oder Schaumstoff aufweisende Fugendichtungsbänder, die im unkomprimierten Zustand möglicherweise noch eine ausreichend niedrige Wärmeleitfähigkeit aufweisen, haben diese im komprimierten Zustand nicht mehr. Im Einbauzustand des einen Schaumstoff aufweisenden Fugendichtungsbandes ist dieses üblicherweise nicht vollständig expandiert, so dass eine ausreichend niedrige Wärmeleitfähigkeit unter Umständen nicht gegeben ist. Die mit einem solchen Fugendichtungsband versehene Fuge, beispielsweise zwischen einem Fensterrahmen und einem Mauerwerk einer Gebäudewandöffnung, stellt eine Verschlechterung der Wärmeisolierung und damit eine unerwünschte Wärmebrücke dar. Erfindungsgemäße Schaumstoffe oder Schaumstoff umfassende Fugendichtungsbänder verbessern die Wärmeisolierung und vermeiden solche unerwünschten Wärmebrücken. Durch die Ausrüstung des Schaumstoffs mit wenigstens einer die Wärmeleitfähigkeit herabsetzenden Substanz wird eine ausreichend geringe Wärmeleitfähigkeit sowohl im unkomprimierten als auch im komprimierten Zustand, wie er im Einbauzustand des Fugendichtungsbandes üblich ist, erreicht.

Erfindungsgemäße Schaumstoff umfassende Fugendichtungsbänder halten die Anforderung an den Mindestwärmeschutz im Bereich von Wärmebrücken gemäß dem Beiblatt 2 der DIN 4108-2:2013-2 "Wärmeschutz und Energie-Einsparung in Gebäuden - Teil 2: Mindestanforderungen an den Wärmeschutz" nicht nur ein, sondern unterschreiten diese.

Es konnte darüber hinaus nachgewiesen werden, dass der erfindungsgemäße Schaumstoff oder das erfindungsgemäße Schaumstoff umfassende Fugendichtungsband im komprimierten Zustand eine geringere Wärmeleitfähigkeit aufweist als im unkomprimierten Zustand.

Erfindungsgemäße Schaumstoff umfassende Fugendichtungsbänder ermöglichen somit eine hochwertige Wärmedämmung, gerade im Zusammenspiel mit beispielsweise einem Fensterrahmen, der eine niedrige Wärmeleitfähigkeit aufweist, und einer gedämmten Gebäudewand.

Vorzugsweise wird unter dem Begriff "Ausrüsten" nicht die Zugabe der wenigstens einen Substanz zu den Ausgangsmaterialien zur Herstellung des Schaumstoffs verstanden, sondern das Versehen eines bereits hergestellten Schaumstoffs mit der wenigstens einen Substanz.

Erfindungsgemäß ist Schaumstoff mit einer Imprägniermasse imprägniert, wobei die Imprägniermasse die wenigstens eine Substanz enthält.

Verfahren zum Imprägnieren eines Schaumstoffs mit einer Imprägniermasse sind dem Fachmann bekannt. Üblicherweise dient die Imprägnierung dazu, den Schaumstoff oder das Schaumstoff umfassende Fugendichtungsband mit einem verzögerten Rückstellverhalten auszubilden. Darüber hinaus kann der Schaumstoff oder das den Schaumstoff aufweisende Fugendichtungsband durch das Imprägnieren mit einer Imprägniermasse mit weiteren Funktionalitäten, insbesondere einer wasserabweisenden Wirkung, einer Luftdichtheit, einem Flammschutz, einer Farbe oder einem UV-Schutz, ausgerüstet werden.

Bei der Imprägniermasse handelt es sich vorzugsweise um eine Lösung oder Dispersion der wenigstens einen Substanz. Diese Lösung oder Dispersion kann zusätzlich zu der wenigstens einen Substanz auch bekannte Füllstoffe und/oder Hilfsstoffe, beispielsweise Schichtsilikate, Tonmineralien, Metalloxide, Metallhydroxide, Glaskugeln, thermoexpandierbare Substanzen, Ruß, Farbpigmente, Flammschutzmittel, Hydrophobierungsmittel und dergleichen, enthalten.

Es kann vorteilhaft sein, wenn die Imprägniermasse ein Bindemittel, vorzugsweise eine wässrige Dispersion auf Basis eines Acrylsäureesters, besonders bevorzugt eine wässrige Dispersion eines Polyacrylsäurebutylesters umfasst.

Für einige Anwendungen kann es auch vorteilhaft sein, wenn die Imprägniermasse ein Bindemittel auf Polyurethanbasis umfasst.

Für gewisse Anwendungen kann es auch vorteilhaft sein, wenn die Imprägniermasse ein Bindemittel auf Wachsbasis umfasst.

Für bestimmte Anwendungen kann es auch vorteilhaft sein, wenn die Imprägniermasse ein Bindemittel auf Bitumenbasis umfasst.

Durch das Imprägnieren wird das Raumgewicht des imprägnierten Schaumstoffs nach seiner Trocknung im Vergleich zu einem nicht imprägnierten Schaumstoff erhöht.

Üblicherweise wird der Schaumstoff mit einer Imprägniermasse getränkt, indem der Schaumstoff in die Imprägniermasse eingetaucht wird, so dass die Imprägniermasse, bevorzugt mit Hilfe von Tauch- oder Quetschwalzen, in die Poren des Schaumstoffs eindringt und diesen vollständig durchdringt. Die Imprägniermasse füllt also die Poren des Schaumstoffs aus. Vorzugsweise wird hierzu ein offenporiger Schaumstoff verwendet.

Nach dem Imprägnieren wird der Schaumstoff mittels mindestens einer Walze, insbesondere mit einem Walzenpaar, gewalzt. Mittels der wenigstens einen Walze wird ein Teil der Imprägniermasse aus dem Schaumstoffkörper bis zum gewünschten Imprägnierungsgrad aus- bzw. abgequetscht. Durch Variation des Walzendruckes kann der Imprägnierungsgrad, das heißt die Menge der vom Schaumstoff aufgenommenen wenigstens einen Substanz, variiert werden. Anschließend wird der Schaumstoff getrocknet und geschnitten.

Es kann vorteilhaft sein, wenn der Schaumstoff zusätzlich zur Imprägnierung mit der wenigstens einen Substanz ein- oder mehrseitig beschichtet ist.

Ist eine hohe Konzentration der wenigstens einen Substanz im Schaumstoff erwünscht, kann es vorteilhaft sein, wenn der Schaumstoff zusätzlich zur Imprägnierung mit der wenigstens einen Substanz ein- oder mehrseitig beschichtet ist.

Durch die Imprägnierung und/oder Beschichtung ist es möglich, große Mengen der wenigstens einen Substanz in und/oder auf den Schaumstoff zu bringen.

Es ist auch möglich, den Schaumstoff unter Druck bzw. im Vakuum oder mit Hilfe einer Sprüheinrichtung zu imprägnieren bzw. zu beschichten.

Die Konzentration der wenigstens einen Substanz im Schaumstoff kann auch durch die Konzentration der wenigstens einen Substanz in der Imprägniermasse beeinflusst werden.

Durch Kombination der vorgenannten Parameter "Konzentration der wenigstens einen Substanz in der Imprägniermasse", "Walzenspalt beim Abquetschen" und gegebenenfalls "zusätzliche Beschichtung" kann das Verhältnis Schaumstoff, Bindemittel, weitere Füllstoffe und/oder Hilfsstoffe zu der wenigstens einen Substanz eingestellt werden.

Es kann vorteilhaft sein, wenn ein erfindungsgemäß imprägnierter Schaumstoff eine Selbstklebeschicht aufweist. Es kann vorteilhaft sein, wenn ein erfindungsgemäß imprägnierter Schaumstoff eine Schwerschichtfolie aufweist. Es kann vorteilhaft sein, wenn ein erfindungsgemäß imprägnierter Schaumstoff eine zusätzliche Beschichtung beispielsweise in Form einer Aluminium- und/oder einer Polyurethanfolie aufweist. Hierdurch kann eine Verbesserung der schall- und/oder wärmetechnischen Isolierung von Rolllädenkästen erreicht werden.

Es kann vorteilhaft sein, wenn der Schaumstoff derart mit der wenigstens einen Substanz ausgerüstet ist, dass die Wärmeleitfähigkeit des Schaumstoffs oder des Schaumstoff umfassenden Fugendichtungsbandes in einem unkomprimierten Zustand ≤ 0,040 W/mK, vorzugsweise ≤ 0,039 W/mK, besonders bevorzugt ≤ 0,038 W/mK, ganz besonders bevorzugt ≤ 0,037 W/mK, noch bevorzugter ≤ 0,0366 W/mK beträgt.

Die Wärmeleitfähigkeit - ausgedrückt durch die Wärmeleitzahl (*λ*) in Watt pro Meter mal Kelvin (W/mK) beschreibt das Vermögen eines Materials, thermische Energie mittels Wärmeleitung zu transportieren. Die Wärmeleitfähigkeit wird gemäß DIN EN 12667 bei einer Mitteltemperatur von 10 °C bestimmt.

Es kann vorteilhaft sein, wenn der Schaumstoff derart mit der Substanz ausgerüstet ist, dass die Wärmeleitfähigkeit des Schaumstoffs oder des Schaumstoff umfassenden Fugendichtungsbandes in einem komprimierten Zustand ≤ 0,04 W/mK, vorzugsweise ≤ 0,039 W/mK, besonders bevorzugt ≤ 0,038 W/mK, ganz besonders bevorzugt ≤ 0,037 W/mK, noch bevorzugter ≤ 0,0366 W/mK beträgt.

Es kann vorteilhaft sein, wenn der Schaumstoff derart mit der wenigstens einen Substanz ausgerüstet ist, dass die Wärmeleitfähigkeit des Schaumstoffs oder des Schaumstoff umfassende Fugendichtungsbandes in einem komprimierten Zustand geringer ist als in einem unkomprimierten Zustand.

Es kann vorteilhaft sein, wenn der Schaumstoff derart mit der wenigstens einen Substanz ausgerüstet ist, dass die Differenz zwischen der Wärmeleitfähigkeit des Schaumstoffs oder des Schaumstoff umfassenden Fugendichtungsbandes in einem unkomprimierten Zustand und in einem um 36%, vorzugsweise um 50 %, besonders bevorzugt um >50% der ursprünglichen Höhe komprimierten Zustand ≥ 0,0005 W/mK, vorzugsweise ≥ 0,0008 W/mK, besonders bevorzugt ≥ 0,001 W/mK, beträgt.

Es kann vorteilhaft sein, wenn es sich bei der wenigstens einen Substanz um einen Feststoff handelt. Ein solcher lässt sich üblicherweise gut handhaben und ist in der Anwendung selbst im Wesentlichen nicht komprimierbar.

Es kann vorteilhaft sein, wenn die wenigstens eine Substanz eine Wärmeleitfähigkeit von < 0,04 W/mK, vorzugsweise ≤ 0,035 W/mK, besonders bevorzugt ≤ 0,035 W/mK, ganz besonders bevorzugt ≤ 0,030 W/mK, noch bevorzugter ≤ 0,025 W/mK, noch bevorzugter ≤ 0,020 W/mK, noch bevorzugter ≤ 0,019 W/mK, noch bevorzugter ≤ 0,018 W/mK, noch bevorzugter ≤ 0,017 W/mK, noch bevorzugter ≤ 0,016 W/mK, noch bevorzugter ≤ 0,015 W/mK aufweist.

Diese außerordentlich geringe Wärmeleitfähigkeit bewirkt eine hohe Temperaturstabilität der Substanz, somit des Schaumstoffs sowie eines diesen Schaumstoff umfassenden Fugendichtungsbandes.

Es kann vorteilhaft sein, wenn die Substanz derart stabil ausgebildet ist, dass diese bei einem Komprimieren des Schaumstoffs oder des Schaumstoffs umfassenden Fugendichtungsbandes nicht komprimiert wird.

Es kann vorteilhaft sein, wenn die mittlere Partikelgröße d₅₀ der Substanz weniger als 500 µm, vorzugsweise weniger als 100 µm, besonders bevorzugt zwischen 5 und 20 µm, ganz besonders bevorzugt weniger als 10 µm, noch bevorzugter weniger als 5 µm, beträgt. Methoden zur Bestimmung der mittleren Partikelgröße d₅₀ sind dem Fachmann bekannt. Die mittlere Partikelgröße kann durch Erstellung einer Partikelgrößenverteilung ermittelt werden. Die Messung kann hierbei mittels Lichtstreuung, insbesondere mittels Laserdiffraktometrie oder Photonenkorrelationsspektroskopie, erfolgen.

Erfindungsgemäß handelt es sich bei der Substanz um ein Aerogel.

Aerogele sind hochporöse Festkörper, bei denen der überwiegende Teil des Volumens aus Poren besteht.

Es kann vorteilhaft sein, wenn die Aerogele auf Silikat-Basis basieren. Es kann für einige Einsatzfälle aber auch vorteilhaft sein, wenn die Aerogele auf Kunststoff-Basis. Für gewisse Einsatzfälle kann es aber auch vorteilhaft sein, wenn die Aerogele auf Kohlenstoff-Basis basieren.

Die Poren der Aerogele weisen einen Durchmesser auf, der im Nanometer-Bereich liegt.

Infolge des großen Porenvolumens eignen sich die Aerogele erfindungsgemäß zur Herabsetzung der Wärmeleitfähigkeit des Schaumstoffs bzw. des den Schaumstoff aufweisenden Fugendichtungsbandes bei geringer Dichte.

Die Aerogele liegen als Partikel vor und können erfindungsgemäß in einer Imprägniermasse dispergiert werden.

Aerogele, vorzugsweise Silicat-Aerogele, sind vorteilhaft chemisch inert.

Es kann vorteilhaft sein, wenn die Aerogele anorganisch sind. Es kann aber auch vorteilhaft sein, wenn die Aerogele anorganisch-organisch sind. Es kann aber auch vorteilhaft sein, wenn die Aerogele organisch sind.

Bevorzugt werden Aerogele, die Si-Verbindungen enthalten. Besonders bevorzugt sind SiO₂-Aerogele, die gegebenenfalls organisch modifiziert sind.

Die Aerogel-Partikel können erfindungsgemäß in monomodaler, bimodaler oder multimodaler Verteilung eingesetzt werden.

In einer bevorzugten Ausführungsform weisen die Aerogel-Partikel eine hydrophobe Beschichtung, insbesondere hydrophobe Oberflächengruppen, auf.

Bevorzugt ist das Ausmaß der Hydrophobierung hinreichend hoch zu bemessen, um dauerhaft ein Eindringen von Wasser in das Innere der Aerogelpartikel zu verhindern. Gleichzeitig wird ein möglichst geringer Anteil an organischem Material der modifizierten Partikel angestrebt, um die Brennbarkeit der Partikel zu minimieren.

Für einige Anwendungen kann es vorteilhaft sein, wenn es sich bei der wenigstens einen Substanz um pyrogene Kieselsäure, vorzugsweise mit hydrophober Oberfläche, handelt.

Es kann vorteilhaft sein, wenn die Substanz derart dimensioniert ist, dass diese auf den Schaumstoff und/oder vorzugsweise in die Poren des Schaumstoffs, insbesondere des Fugendichtungsbandes, bringbar ist.

Es kann vorteilhaft sein, wenn die wenigstens eine Substanz im und auf dem Schaumstoff des Fugendichtungsbandes, homogen verteilt ist. Es kann für einige Anwendungsfälle aber auch vorteilhaft sein, wenn die wenigstens eine Substanz im und auf dem Schaumstoff, beispielsweise über die Breite und/oder über die Höhe des Fugendichtungsbandes, inhomogen verteilt ist.

Es kann vorteilhaft sein, wenn die Imprägniermasse die Substanz in einer Menge von 1 bis 5 Gew.-% i.Tr., vorzugsweise von 2 bis 3 Gew.-% i.Tr., jeweils bezogen auf 100 Gew.-% i.Tr. Imprägniermasse enthält.

Es hat sich auch gezeigt, dass aufgrund der Ausrüstung des Schaumstoffs mit einer die Wärmeleitfähigkeit des Schaumstoffs oder des Schaumstoff umfassenden Fugendichtungsbandes herabsetzenden Substanz, insbesondere mit einer wenigstens einer der vorgenannten Substanzen, eine erhebliche Verbesserung des Flammschutzes erreicht wird.

Es kann von Vorteil sein, wenn die eingesetzte Art und Menge der wenigstens einen Substanz derart gewählt ist, dass das Schaumstoff umfassende Fugendichtungsband in seinem angegebenen Anwendungsbereich wenigstens einer der gängigen Brandnormen für den Baubereich entspricht, beispielsweise DIN 4102-B1 und/oder DIN 4102-B2 und/oder DIN 4102-≥F30 und/oder EN13501 Klasse E bis B und/oder EN 13501>R30 bzw. >EI30.

Bei einem Funktionserhaltungstest nach einer der vorgenannten Normen erfolgt die Beflammung und damit Erhitzung eines Fugendichtungsbandes gemäß der so genannten Einheitstemperaturkurve (ETK).

Durch die im Anwendungsbereich des erfindungsgemäßen Gegenstandes herabgesetzte und damit verbesserte Wärmeleitfähigkeit der Fugenabdichtung, die zu einer besseren thermischen Isolierung von Brandschutzbauteilen beiträgt, wird die Hitzeübertragung im Brandfall bzw. im Versuchsfall mit Belastungen nach der Einheitstemperaturkurve vorteilhaft reduziert.

Die gilt beispielsweise bei Anschlüssen von Brandschutztüren mit der Klassifizierung "I" nach der EN 1634.

Nach alledem führt die Ausrüstung eines Schaumstoffs eines Fugendichtungsbandes, mit wenigstens einer die Wärmeleitfähigkeit des Schaumstoffs eines Fugendichtungsbandes, herabsetzenden Substanz, mit einem Aerogel, zu einer Verbesserung der Wärmeleitfähigkeit, zu einer Verbesserung des Flammschutz, zu einer Verbesserung der Hydrophobierung und/oder zu einer Verbesserung Luftdichtheit des Schaumstoffs oder des den Schaumstoff enthaltenden Fugendichtungsbandes.

Es kann vorteilhaft sein, wenn der Schaumstoff offenzellig oder zumindest teilweise offenzellig ist.

Es kann vorteilhaft sein, wenn der Schaumstoff, insbesondere für ein Fugendichtungsband, ein Polyurethanschaumstoff ist.

Es kann vorteilhaft sein, wenn der Schaumstoff rückstellfähig ist.

Es kann vorteilhaft sein, wenn der Schaumstoff nach einer Imprägnierung verzögert rückstellfähig ist.

Es kann vorteilhaft sein, wenn der Schaumstoff ein retikulierter Polyurethanschaumstoff ist.

Es kann vorteilhaft sein, wenn der Schaumstoff, insbesondere für eine Rollladenkastendämmung, ein Melaminharzschaumstoff ist.

Es kann vorteilhaft sein, wenn wenigstens ein Schaumstoff, Schaumstoffabschnitt oder Schaumstoffelement eines Fugendichtungsbandes, wie es Gegenstand der WO 2012/167762 A1 ist, erfindungsgemäß mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der DE 196 41 415 A1 oder der DE 200 09 674 U1 ist, erfindungsgemäß mit der wenigstens einen Substanz ausgerüstet ist.

Es kann vorteilhaft sein, wenn wenigstens ein Schaumstoff, Schaumstoffabschnitt oder Zusatz-Schaumstoffmaterial bzw. Schaumstoffstreifen eines Fugendichtungsbandes, wie es Gegenstand der EP 1 811 111 A2 ist, erfindungsgemäß mit der wenigstens einen Substanz ausgerüstet ist. Es kann insbesondere von Vorteil sein, wenn wenigstens eine der in EP 1 811 111 A2 genannten Seiten, insbesondere wenigstens Schmalseite, eines Fugendichtungsbandes mit der wenigstens einen Substanz beschichtet ist.

Es kann vorteilhaft sein, wenn wenigstens ein Schaumstoff, Schaumstoffabschnitt oder Schaumstoffelement eines profilierten Fugendichtungsbandes, wie es Gegenstand der WO 2009/138311 A1 ist, erfindungsgemäß mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 112 292 A2 ist, erfindungsgemäß mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 784 231 A1 ist, erfindungsgemäß mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 420 631 A2 ist, erfindungsgemäß mit der wenigstens einen Substanz ausgerüstet ist. Es kann insbesondere von Vorteil sein, wenn das in der EP 1 811 111 A2 genannte Einlegeteil mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 354 410 A2 ist, erfindungsgemäß mit der wenigstens einen Substanz ausgerüstet ist. Es kann insbesondere von Vorteil sein, wenn wenigstens ein der in der EP 2 354 410 A2 genannten Schaumstoffstreifen mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 065 548 A2 ist, erfindungsgemäß mit der wenigstens einen Substanz ausgerüstet ist. Es kann insbesondere von Vorteil sein, wenn wenigstens ein der in der EP 2 065 548 A2 genannten Schaumstoffstreifen mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der WO 94/20701 A1 ist, erfindungsgemäß mit der wenigstens einen Substanz ausgerüstet ist. Es kann insbesondere von Vorteil sein, wenn wenigstens einer der in der WO 94/20701 A1 genannten Schaumstoffabschnitte bildendenden Rand-Längsbereiche mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 982 821 A1 ist, erfindungsgemäß mit der wenigstens einen Substanz ausgerüstet ist. Es kann insbesondere von Vorteil sein, wenn der in der EP 2 982 821 A1 genannte Schaumstoffkörper entsprechend ungleichmäßig mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 107 176 A1 ist, erfindungsgemäß mit der wenigstens einen Substanz ausgerüstet ist. Es kann insbesondere von Vorteil sein, wenn eine in der EP 2 107 176 A1 auf mindestens einer Seitenfläche der Dichtbandrolle vorgesehene Beschichtung mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 415 942 A1 ist, erfindungsgemäß mit der wenigstens einen Substanz ausgerüstet ist. Es kann insbesondere von Vorteil sein, wenn wenigstens einer der in der EP 2 415 942 A1 genannten Schaumstoffstreifen mit der wenigstens einen Substanz ausgerüstet ist.

Es kann vorteilhaft sein, wenn wenigstens ein Schaumstoff, Schaumstoffabschnitt oder Schaumstoffelement eines Fugendichtungsbandes, wie es Gegenstand der EP 2 990 575 A1 ist, erfindungsgemäß mit der wenigstens einen Substanz ausgerüstet ist. Es kann insbesondere von Vorteil sein, wenn wenigstens einer der in der EP 2 990 575 A1 genannten Schaumstoffstreifen mit der wenigstens einen Substanz ausgerüstet ist.

Vorzugsweise weist das Fugendichtungsband zwei Längsseiten sowie eine im Einbauzustand des Fugendichtungsbandes an die eine Fugenflanke angrenzende Ober- und eine im Einbauzustand des Fugendichtungsbandes an die gegenüberliegende Fugenflanke angrenzende Unterseite aufweist. Die Breite des Fugendichtungsbandes ist somit der Abstand zwischen zwei Längsseiten.

Der Schaumstoff eines Fugendichtungsbandes kann in mehrere Schaumstoffabschnitte oder Schaumstoffelemente unterteilt sein. Die Unterteilung kann sich beispielsweise durch wenigstens eine im Schaumstoff vorhandene Trennschicht, beispielsweise in Form einer Klebstoff- oder Membranschicht, oder durch ein unterschiedliches Höhenprofil ergeben. Es kann vorteilhaft sein, wenn ein oder mehr als ein Schaumstoffabschnitt oder Schaumstoffelement mit der wenigstens einen Substanz ausgerüstet ist. Bei mehreren Schaumstoffabschnitten oder Schaumstoffelementen kann es vorteilhaft sein, wenn wenigstens zwei Schaumstoffabschnitte oder Schaumstoffelemente mit der wenigstens einen Substanz entweder in gleicher oder in unterschiedlicher Konzentration ausgerüstet sind.

Es kann vorteilhaft sein, wenn mehrere Dichtbereiche innerhalb eines Fugendichtungsbandes vorgesehen sind.

Es kann vorteilhaft sein, wenn wenigstens zwei Schaumstoffabschnitte unterschiedliche Raumgewichte aufweisen.

Es kann zweckmäßig sein, wenn der Schaumstoff bzw. wenigstens ein oder jeder Schaumstoffabschnitt ein Polyurethan-Schaumstoff, vorzugsweise ein Polyurethan-Weichschaumstoff ist. Dieser stellt sich nach einer Vorkomprimierung besonders gut innerhalb der Fuge zurück und sorgt für eine dauerhafte Abdichtung.

Es kann vorteilhaft sein, wenn der Schaumstoff bzw. wenigstens ein oder jeder Schaumstoffabschnitt oder ein oder jedes Schaumstoffelement ein oder mehrere Funktionsbereiche aufweist, vorzugsweise einen ersten nach außen schlagregendichten Bereich, einen zweiten wärmedämmenden sowie schallmindernden Bereich und einen dritten nach innen luftdichten Bereich.

Es kann vorteilhaft sein, wenn nur der wärmedämmende Bereich die wenigstens eine Substanz aufweist.

Es kann aber auch von Vorteil sein, wenn der zweite und dritte Bereich die wenigstens eine Substanz aufweist.

Es kann vorteilhaft sein, wenn die nach innen weisende Längsseite zusätzlich oder ausschließlich mit der wenigstens einen Substanz beschichtet ist.

Es kann vorteilhaft sein, wenn die Ober- oder/und Unterseite zusätzlich oder ausschließlich mit der wenigstens einen Substanz beschichtet ist.

Es kann zweckmäßig sein, wenn das Fugendichtungsband komprimierbar, vorzugsweise vorkomprimiert ist.

Vorteilhaft kann das Fugendichtungsband in Rollenform vorkomprimiert und verzögert rückstellfähig sein.

Vorzugsweise beträgt die Dicke des Fugendichtungsbandes im nicht komprimierten Zustand zwischen 10 mm und 100 mm, vorzugsweise zwischen 18 mm bis 60 mm.

Es kann vorteilhaft sein, wenn das Fugendichtungsband zur Abdichtung von Fugen zwischen zusammengefügten Bauelementen im Hausbau, insbesondere zwischen Wandöffnungen einer Außenwand und Fenster- oder Türrahmen, vorzugsweise ohne Zuhilfenahme zusätzlicher Fugenbändern oder Hinterfüllmaterialien, einsetzbar ist.

Es kann vorteilhaft sein, wenn das Fugendichtungsband zur Abdichtung von Fugen in einem Wärmedämmverbundsystem einsetzbar ist.

Es kann vorteilhaft sein, wenn das Fugendichtungsband zur Abdichtung von Fugen in einem an einer Vorwandmontagezarge einsetzbar ist.

Es kann von Vorteil sein, wenn das Fugendichtungsband einseitig selbstklebend ausgebildet ist. Die Seite kann vollflächig mit einer Selbstklebeschicht oder nicht vollflächig mit einer oder mehr als einer Selbstklebebahn beschichtet sein, welche vorzugsweise mit einem lösbaren Silikonpapier abgedeckt ist.

### Beispiel

Es wurde die Wärmeleitfähigkeit gemäß DIN EN 12667 bei einer Mitteltemperatur von 10 °C an vier Proben, die eine Dicke von 30 mm hatten, bestimmt.

### Probe 1:

Schaumstoff (imprägniert ohne Substanz unkomprimiert): 0,0425 W/mK

### Probe 2:

Schaumstoff (imprägniert ohne Substanz, um 36% komprimiert): 0,0433 W/mK

### Probe 3:

Schaumstoff (imprägniert mit Aerogel, unkomprimiert): 0,0366 W/mK

### Probe 4:

Schaumstoff (imprägniert mit Aerogel, um 36% komprimiert): 0,0361 W/mK

Das Beispiel zeigt deutlich, dass der die wenigstens eine Substanz nicht aufweisende Schaumstoff im komprimierten Zustand eine höhere Wärmeleitfähigkeit hat als im unkomprimierten Zustand. Die im unkomprimierten Zustand des Schaumstoffs hohe Wärmeleitfähigkeit erhöht sich nachteilig im komprimierten Zustand.

Durch die Ausrüstung des Schaumstoffs mit einem die Wärmeleitfähigkeit herabsetzenden Aerogel wird eine ausreichend geringe Wärmeleitfähigkeit nicht nur im unkomprimierten, sondern auch im komprimierten Zustand erreicht, wobei die Wärmleitfähigkeit im komprimierten Zustand vorteilhaft sogar geringer ist als im unkomprimierten.

Weitere vorteilhafte Ausgestaltungen der Erfindung ergeben sich aus der Zeichnung in Zusammenhang mit deren Beschreibung, wobei nachfolgend die Erfindung anhand von Ausführungsbeispielen erläutert wird, die in der Zeichnung dargestellt sind. In dieser zeigen:

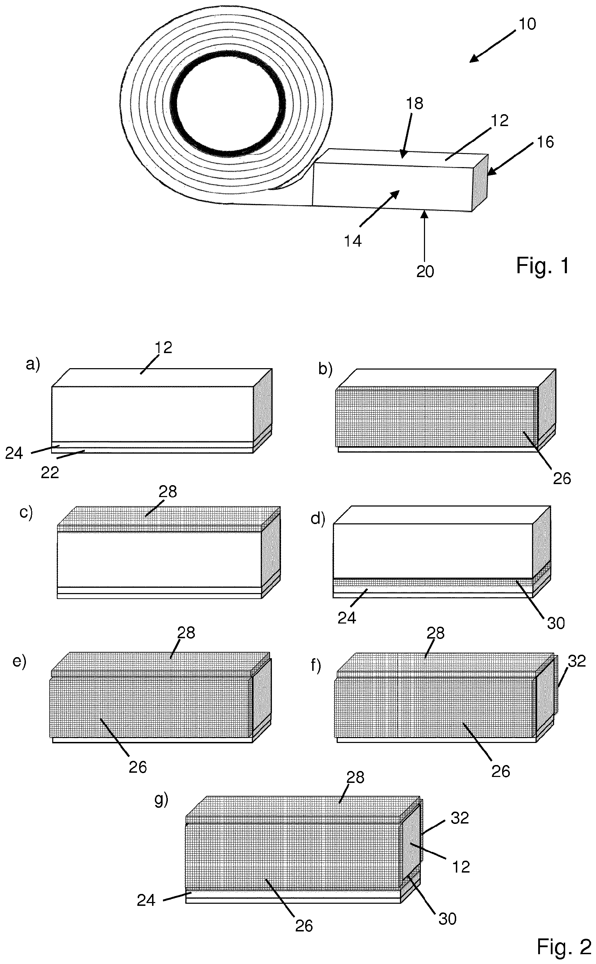

- Fig. 1: eine schematische Darstellung eines in Rollenform vorrätig gehaltenen und vorkomprimierten ersten Fugendichtungsbandes in Seitenansicht mit einem bereits abgerollten, zurückgestellten Abschnitt in perspektivischer Ansicht, wobei das Fugendichtungsband einen Schaumstoff aufweist,
- Fig. 2: in schematischer Darstellung Varianten des in Fig. 1 gezeigten Fugendichtungsbandes, jeweils mit einer auf der Unterseite angeordneten und mit einem Abdeckpapier versehenen Selbstklebeschicht, in Form eines Abschnitts a) gemäß Stand der Technik, b) mit einer Aerogel aufweisenden Beschichtung auf einer Längsseite des Schaumstoffs, c) mit einer Aerogel aufweisenden Beschichtung auf der Oberseite des Schaumstoffs, d) mit einer Aerogel aufweisenden Beschichtung auf der Unterseite des Schaumstoffs, zwischen Schaumstoff und Selbstklebeschicht, e) mit einer Aerogel aufweisenden Beschichtung auf einer Längsseite des Schaumstoffs und mit einer Aerogel aufweisenden Beschichtung auf der Oberseite des Schaumstoffs, f) mit einer Aerogel aufweisenden Beschichtung auf beiden Längsseiten des Schaumstoffs und mit einer Aerogel aufweisenden Beschichtung auf der Oberseite des Schaumstoffs und g) mit einer Aerogel aufweisenden Beschichtung auf beiden Längsseiten des Schaumstoffs sowie mit einer Aerogel aufweisenden Beschichtung auf der Oberseite des Schaumstoffs und mit einer Aerogel aufweisenden Beschichtung auf der Unterseite des Schaumstoffs, zwischen Schaumstoff und Selbstklebeschicht,

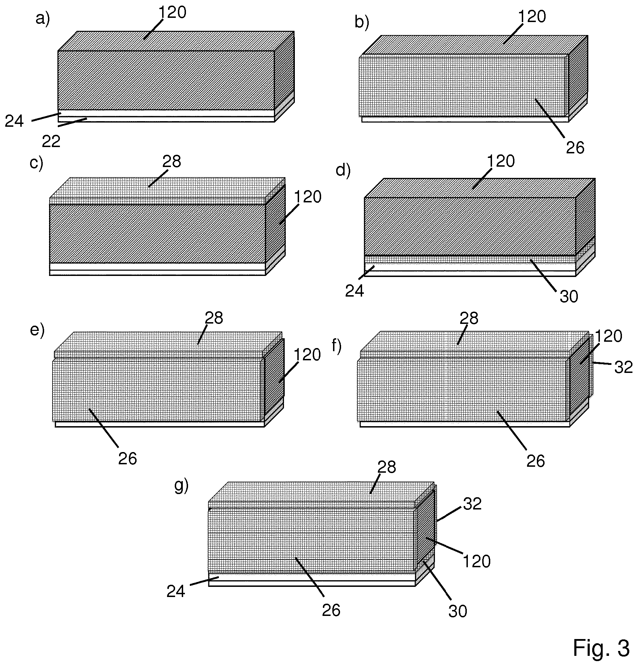

- Fig. 3: in schematischer Darstellung Varianten des in Fig. 1 gezeigten Fugendichtungsbandes, jeweils mit einer auf der Unterseite angeordneten und mit einem Abdeckpapier versehenen Selbstklebeschicht, in Form eines Abschnitts a) mit homogen im Schaumstoff verteiltem Aerogel, b) wie a), aber zusätzlich mit einer Aerogel aufweisenden Beschichtung auf einer Längsseite des Schaumstoffs, c) wie a), aber zusätzlich mit einer Aerogel aufweisenden Beschichtung auf der Oberseite des Schaumstoffs, d) wie a), aber zusätzlich mit einer Aerogel aufweisenden Beschichtung auf der Unterseite des Schaumstoffs, zwischen Schaumstoff und Selbstklebeschicht, e) wie a), aber zusätzlich mit einer Aerogel aufweisenden Beschichtung auf einer Längsseite des Schaumstoffs und mit einer Aerogel aufweisenden Beschichtung auf der Oberseite des Schaumstoffs, f) wie a), aber zusätzlich mit einer Aerogel aufweisenden Beschichtung auf beiden Längsseiten des Schaumstoffs und mit einer Aerogel aufweisenden Beschichtung auf der Oberseite des Schaumstoffs und g) wie a), aber zusätzlich mit einer Aerogel aufweisenden Beschichtung auf beiden Längsseiten des Schaumstoffs sowie mit einer Aerogel aufweisenden Beschichtung auf der Oberseite des Schaumstoffs und mit einer Aerogel aufweisenden Beschichtung auf der Unterseite des Schaumstoffs, zwischen Schaumstoff und Selbstklebeschicht,

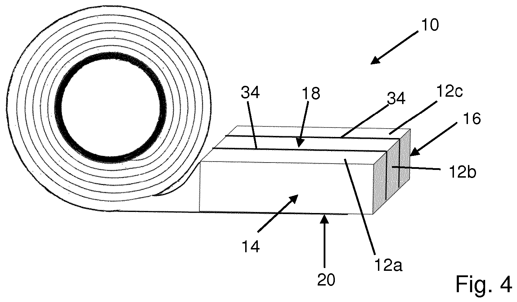

- Fig. 4: eine schematische Darstellung eines in Rollenform vorrätig gehaltenen und vorkomprimierten zweiten Fugendichtungsbandes in Seitenansicht mit einem bereits abgerollten, zurückgestellten Abschnitt in perspektivischer Ansicht, wobei das Fugendichtungsband drei Schaumstoffelemente aufweist,

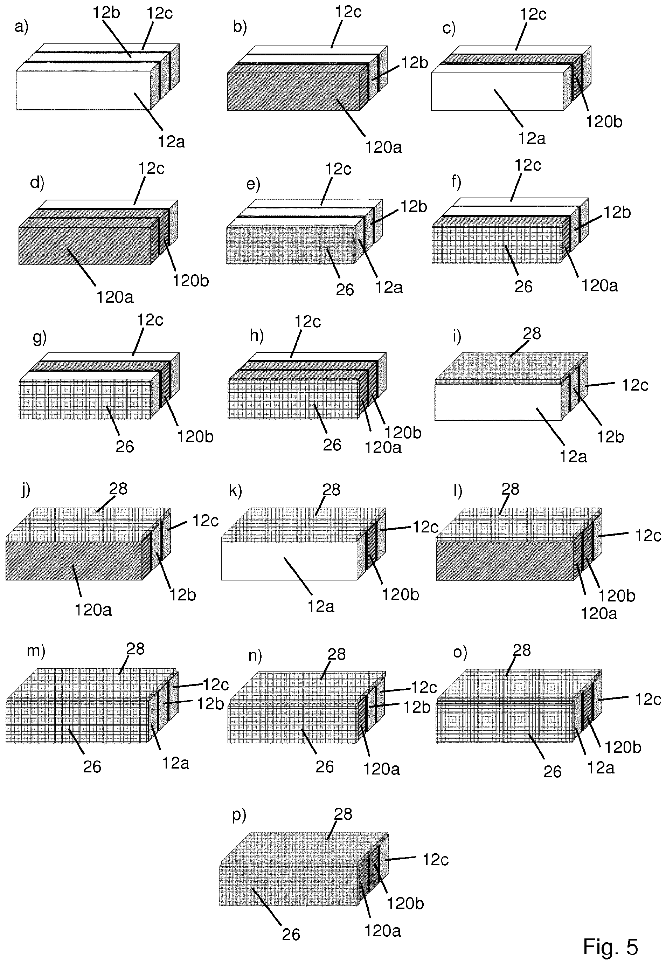

- Fig. 5: in schematischer Darstellung Varianten des in Fig. 4 gezeigten Fugendichtungsbandes, in Form eines Abschnitts a) gemäß Stand der Technik, b) mit homogen in einem außenliegenden Schaumstoffelement verteiltem Aerogel, c) mit homogen in einem innenliegenden Schaumstoffelement verteiltem Aerogel, d) mit homogen in einem außen- und in einem innenliegenden Schaumstoffelement verteiltem Aerogel, e) wie a), aber mit einer Aerogel aufweisenden Beschichtung auf der Längsseite eines außenliegenden Schaumstoffelements, f) wie b), aber zusätzlich mit einer Aerogel aufweisenden Beschichtung auf der Längsseite des außenliegenden Aerogel aufweisenden Schaumstoffelements, g) wie c), aber zusätzlich mit einer Aerogel aufweisenden Beschichtung auf einer Längsseite des außenliegenden Schaumstoffelements, h) wie d) aber zusätzlich mit einer Aerogel aufweisenden Beschichtung auf der Längsseite des außenliegenden Aerogel aufweisenden Schaumstoffelements, i) wie a), aber zusätzlich mit einer Aerogel aufweisenden Beschichtung auf der Oberseite der Schaumstoffelemente, j) wie b), aber zusätzlich mit einer Aerogel aufweisenden Beschichtung auf der Oberseite der Schaumstoffelemente, k) wie c) aber zusätzlich mit einer Aerogel aufweisenden Beschichtung auf der Oberseite der Schaumstoffelemente, l) wie d), aber zusätzlich mit einer Aerogel aufweisenden Beschichtung auf der Oberseite der Schaumstoffelemente, m) wie e), aber zusätzlich mit einer Aerogel aufweisenden Beschichtung auf der Oberseite der Schaumstoffelemente, n) wie f), aber zusätzlich mit einer Aerogel aufweisenden Beschichtung auf der Oberseite der Schaumstoffelemente, o) wie g) aber zusätzlich mit einer Aerogel aufweisenden Beschichtung auf der Oberseite der Schaumstoffelemente, p) wie h), aber zusätzlich mit einer Aerogel aufweisenden Beschichtung auf der Oberseite der Schaumstoffelemente und

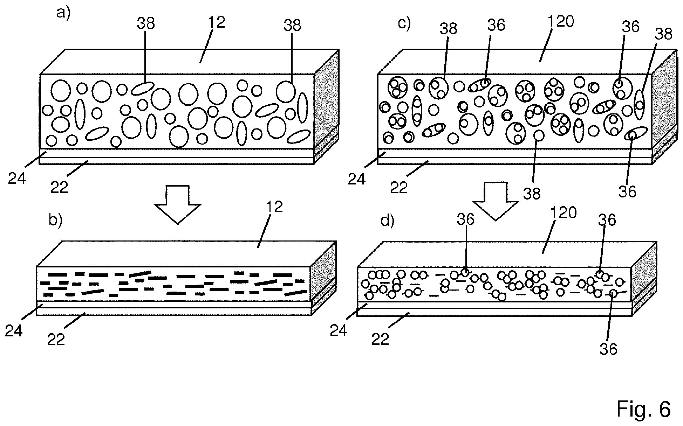

- Fig. 6: in rein schematischer Darstellung jeweils einen Ausschnitt eines Fugendichtungsbandes, umfassend einen Schaumstoff mit einer auf der Unterseite angeordneten und mit einem Abdeckpapier versehenen Selbstklebeschicht, nämlich a) unkomprimiert, ohne Aerogel, b) komprimiert, ohne Aerogel, c) unkomprimiert mit homogen im Schaumstoff verteiltem Aerogel und d) komprimiert mit homogen im Schaumstoff verteiltem Aerogel.

In der Zeichnung sind die für das Verständnis der Erfindung wesentlichen Merkmale dargestellt und erläutert. Werden in den Figuren gleiche Bezugsziffern verwendet, so bezeichnen diese gleiche Teile.

Fig. 1 zeigt eine schematische Darstellung eines in Rollenform vorrätig gehaltenen und vorkomprimierten ersten Fugendichtungsbandes 10 in Seitenansicht mit einem bereits abgerollten, zurückgestellten Abschnitt in perspektivischer Ansicht, wobei das Fugendichtungsband 10 einen Schaumstoff 12 aufweist. Das Fugendichtungsband 10 weist zwei Längsseiten 14, 16 sowie eine im Einbauzustand des Fugendichtungsbandes 10 an die eine Fugenflanke angrenzende Oberseite 18 und eine im Einbauzustand des Fugendichtungsbandes 10 an die gegenüberliegende Fugenflanke angrenzende Unterseite 20 auf. Dieser allgemeine Aufbau des Fugendichtbandes 10 ist Stand der Technik.

Fig. 2 zeigt nun in schematischer Darstellung Varianten des in Fig. 1 gezeigten Fugendichtungsbandes, jeweils mit einer auf der Unterseite 20 angeordneten und mit einem Abdeckpapier 22 versehenen Selbstklebeschicht 24, in Form eines Ausschnitts a) gemäß Stand der Technik, und dann erfindungsgemäß b) mit einer Aerogel aufweisenden Beschichtung 26 auf einer Längsseite 14 des Schaumstoffs 12, c) mit einer Aerogel aufweisenden Beschichtung 28 auf der Oberseite 18 des Schaumstoffs 12, d) mit einer Aerogel aufweisenden Beschichtung 30 auf der Unterseite 20 des Schaumstoffs 12, nämlich zwischen Schaumstoff 12 und Selbstklebeschicht 24 , e) mit einer Aerogel aufweisenden Beschichtung 28 auf einer Längsseite 14 des Schaumstoffs 12 und mit einer Aerogel aufweisenden Beschichtung 28 auf der Oberseite 18 des Schaumstoffs 12, f) mit einer Aerogel aufweisenden Beschichtung 26, 32 auf beiden Längsseiten 14, 16 des Schaumstoffs 12 und mit einer Aerogel aufweisenden Beschichtung 28 auf der Oberseite 18 des Schaumstoffs 12 und g) mit einer Aerogel aufweisenden Beschichtung 26, 32 auf beiden Längsseiten 14, 16 des Schaumstoffs 12 sowie mit einer Aerogel aufweisenden Beschichtung 28 auf der Oberseite 18 des Schaumstoffs 12 und mit einer Aerogel aufweisenden Beschichtung 30 auf der Unterseite 20 des Schaumstoffs 12, nämlich zwischen Schaumstoff 12 und Selbstklebeschicht 24. Selbstverständlich ist die Selbstklebeschicht mit Abdeckfolie im Rahmen der Erfindung optional.

Fig. 3 zeigt in schematischer Darstellung Varianten des in Fig. 1 gezeigten Fugendichtungsbandes, jeweils mit einer auf der Unterseite 20 angeordneten und mit einem Abdeckpapier 22 versehenen Selbstklebeschicht 24, in Form eines Ausschnitts, und zwar erfindungsgemäß a) mit homogen im Schaumstoff 120 verteiltem Aerogel, b) wie a), aber zusätzlich mit einer Aerogel aufweisenden Beschichtung 26 auf einer Längsseite 14 des Schaumstoffs 120, c) wie a), aber zusätzlich mit einer Aerogel aufweisenden Beschichtung 28 auf der Oberseite 18 des Schaumstoffs 120, d) wie a), aber zusätzlich mit einer Aerogel aufweisenden Beschichtung 30 auf der Unterseite 20 des Schaumstoffs 120, nämlich zwischen Schaumstoff 120 und Selbstklebeschicht 24, e) wie a), aber zusätzlich mit einer Aerogel aufweisenden Beschichtung 26 auf einer Längsseite 14 des Schaumstoffs 120 und mit einer Aerogel aufweisenden Beschichtung 28 auf der Oberseite 18 des Schaumstoffs 120, f) wie a), aber zusätzlich mit einer Aerogel aufweisenden Beschichtung 26, 32 auf beiden Längsseiten 14, 16 des Schaumstoffs 120 und mit einer Aerogel aufweisenden Beschichtung 28 auf der Oberseite 18 des Schaumstoffs 120 und g) wie a), aber zusätzlich mit einer Aerogel aufweisenden Beschichtung 26, 32 auf beiden Längsseiten 14, 16 des Schaumstoffs 120 sowie mit einer Aerogel aufweisenden Beschichtung 28 auf der Oberseite 18 des Schaumstoffs 120 und mit einer Aerogel aufweisenden Beschichtung 30 auf der Unterseite 20 des Schaumstoffs 20, nämlich zwischen Schaumstoff 120 und Selbstklebeschicht 24. Selbstverständlich ist die Selbstklebeschicht 24 mit Abdeckfolie 22 im Rahmen der Erfindung optional.

Fig. 4 zeigt eine schematische Darstellung eines in Rollenform vorrätig gehaltenen und vorkomprimierten zweiten Fugendichtungsbandes 10 in Seitenansicht mit einem bereits abgerollten, zurückgestellten Abschnitt in perspektivischer Ansicht. Das Fugendichtungsband 10 weist zwei Längsseiten 14, 16 sowie eine im Einbauzustand des Fugendichtungsbandes 10 an die eine Fugenflanke angrenzende Oberseite 18 und eine im Einbauzustand des Fugendichtungsbandes 10 an die gegenüberliegende Fugenflanke angrenzende Unterseite 20 auf. Zwischen Oberseite 18 und Unterseite 20 sowie parallel bzw. nahezu parallel zu den Längsseiten 14, 16 verlaufen zwei Membranschichten 34 jeweils in Längsrichtung. Das Fugendichtungsband 10 umfasst drei Schaumstoffe bzw. Schaumstoffelemente 12a, 12b, 12c, wobei die zwei Membranschichten 22 jeweils zwischen zwei Schaumstoffelementen 12a, 12b und 12b, 12c angeordnet sind. Dieser allgemeine Aufbau des Fugendichtbandes 10 ist Stand der Technik.

Fig. 5 zeigt in schematischer Darstellung Varianten des in Fig. 4 gezeigten Fugendichtungsbandes 10, in Form eines Ausschnitts a) gemäß Stand der Technik, b) mit homogen in einem außenliegenden Schaumstoffelement 120a verteiltem Aerogel, c) mit homogen in einem innenliegenden Schaumstoffelement 120b verteiltem Aerogel, d) mit homogen in einem außen- und in einem innenliegenden Schaumstoffelement 120a, 120b verteiltem Aerogel, e) wie a), aber mit einer Aerogel aufweisenden Beschichtung 26 auf der Längsseite 14 eines außenliegenden Schaumstoffelements 12a, f) wie b), aber zusätzlich mit einer Aerogel aufweisenden Beschichtung 26 auf der Längsseite 14 des außenliegenden Aerogel aufweisenden Schaumstoffelements 120a, g) wie c), aber zusätzlich mit einer Aerogel aufweisenden Beschichtung 26 auf einer Längsseite 14 des außenliegenden Schaumstoffelements 12a, h) wie d) aber zusätzlich mit einer Aerogel aufweisenden Beschichtung 26 auf der Längsseite 14 des außenliegenden Aerogel aufweisenden Schaumstoffelements 120a, i) wie a), aber zusätzlich mit einer Aerogel aufweisenden Beschichtung 28 auf der Oberseite 18 der Schaumstoffelemente 12a, 12b, 12c, j) wie b), aber zusätzlich mit einer Aerogel aufweisenden Beschichtung 28 auf der Oberseite 18 der Schaumstoffelemente 120a, 12b, 12c, k) wie c) aber zusätzlich mit einer Aerogel aufweisenden Beschichtung 28 auf der Oberseite 18 der Schaumstoffelemente 12a, 120b, 12c, l) wie d), aber zusätzlich mit einer Aerogel aufweisenden Beschichtung 28 auf der Oberseite 18 der Schaumstoffelemente 120a, 120b, 12c, m) wie e), aber zusätzlich mit einer Aerogel aufweisenden Beschichtung 28 auf der Oberseite 18 der Schaumstoffelemente 12a, 12b, 12c, n) wie f), aber zusätzlich mit einer Aerogel aufweisenden Beschichtung 28 auf der Oberseite 18 der Schaumstoffelemente 120a, 12b, 12c, o) wie g) aber zusätzlich mit einer Aerogel aufweisenden Beschichtung 28 auf der Oberseite 18 der Schaumstoffelemente 12a, 120b, 12c, und p) wie h), aber zusätzlich mit einer Aerogel aufweisenden Beschichtung 28 auf der Oberseite 18 der Schaumstoffelemente 120a, 120b, 12c.

Fig. 6 zeigt in rein schematischer Darstellung jeweils einen Ausschnitt eines Fugendichtungsbandes, umfassend einen Schaumstoff 12 mit einer auf der Unterseite 20 angeordneten und mit einem Abdeckpapier 22 versehenen Selbstklebeschicht 24, nämlich a) unkomprimiert, ohne Aerogel, b) komprimiert, ohne Aerogel, c) unkomprimiert mit homogen im Schaumstoff 12 verteiltem Aerogel 36 und d) komprimiert mit homogen im Schaumstoff 12 verteiltem Aerogel 36.

Fig. 6 erklärt modellhaft die Wirkung eines durch Imprägnierung homogen in einem Schaumstoff 12 verteilten Aerogels 36.

Der in Fig. 6 a) gezeigte Schaumstoff 12 liegt unkomprimiert vor und weist luftgefüllte Hohlräume bzw. Poren 38 auf, die die einen Einfluss auf die Wärmeleitfähigkeit des Schaumstoffs 12 haben. Die luftgefüllten Hohlräume bzw. Poren 38 machen den Schaumstoff 12 wärmeisolierend. Fig. 6 b) zeigt den Schaumstoff 12 aus Fig. 6 a) im komprimierten Zustand. Es ist deutlich zu erkennen, dass aus den zuvor noch vorhandenen Hohlräumen bzw. Poren 38 die Luft entwichen ist bzw. die Hohlräume bzw. Poren 38 verschwunden sind, wodurch sich nachteilig die Wärmeleitfähigkeit des komprimierten Schaumstoff erhöht und der Schaumstoff 12 nicht mehr wärmeisolierend ist.

Der in Fig. 6 c) gezeigte Schaumstoff 120 ist homogen mit einem Aerogel 36 imprägniert, wobei das Aerogel 36 in den luftgefüllten Hohlräumen bzw. Poren 38 des Schaumstoffs 120 angeordnet ist. Das Aerogel 36 führt bereits im unkomprimierten Zustand des Schaumstoffs 120 zu einer Verringerung der Wärmeleitfähigkeit gegenüber einem ebenfalls im unkomprimierten Zustand vorliegenden, aber nicht mit Aerogel imprägnierten Schaumstoff 12, wie er in Fig. 6a) dargestellt ist. Das Aerogel 36 bewirkt also eine Verbesserung der Wärmeisolierung des Schaumstoffs 12. Fig. 6 d) zeigt den Schaumstoff 120 aus Fig. 6 c) im komprimierten Zustand. Es ist deutlich zu erkennen, dass das Aerogel 36 nicht komprimiert wurde. Es konnte nachgewiesen werden, dass sich Wärmeleitfähigkeit des Aerogel 36 aufweisenden komprimierten Schaumstoffs 120 gegenüber der Wärmeleitfähigkeit des Aerogel 36 aufweisenden unkomprimierten Schaumstoffs 120 sogar weiter verringert hat. Die Wärmeisolierung des Schaumstoffs 12 hat sich also nochmals verbessert.

## Patentansprüche

1. Fugendichtungsband umfassend einen Schaumstoff, wobei der Schaumstoff mit wenigstens einer Substanz ausgerüstet ist, die die Wärmeleitfähigkeit des Schaumstoffs herabsetzt, **dadurch gekennzeichnet, dass** der Schaumstoff mit einer Imprägniermasse imprägniert ist, wobei die Imprägniermasse die Substanz in Form von Partikeln enthält, wobei es sich bei der Substanz um ein Aerogel oder um pyrogene Kieselsäure handelt.

2. Fugendichtungsband nach Anspruch 1, **dadurch gekennzeichnet, dass** der Schaumstoff derart mit der Substanz ausgerüstet ist, dass die Wärmeleitfähigkeit des Fugendichtungsbandes in einem unkomprimierten Zustand ≤ 0,040 W/mK, vorzugsweise 0,039 ≤ W/mK, besonders bevorzugt ≤ 0,038 W/mK, ganz besonders bevorzugt ≤ 0,037 W/mK, noch bevorzugter ≤ 0,0366 W/mK beträgt.

3. Fugendichtungsband nach wenigstens einem der vorherigen Ansprüche, **dadurch gekennzeichnet, dass** der Schaumstoff derart mit der Substanz ausgerüstet ist, dass die Wärmeleitfähigkeit des Fugendichtungsbandes in einem komprimierten Zustand ≤ 0,040W/mK, vorzugsweise ≤ 0,039 W/mK, besonders bevorzugt ≤ 0,038 W/mK, ganz besonders bevorzugt ≤ 0,037 W/mK, noch bevorzugter ≤ 0,0366 W/mK beträgt.

4. Fugendichtungsband nach wenigstens einem der vorherigen Ansprüche, **dadurch gekennzeichnet, dass** der Schaumstoff derart mit der wenigstens einen Substanz ausgerüstet ist, dass die Wärmeleitfähigkeit des Fugendichtungsbandes in einem komprimierten Zustand geringer ist als in einem unkomprimierten Zustand.

5. Fugendichtungsband nach wenigstens einem der vorherigen Ansprüche, **dadurch gekennzeichnet, dass** die Substanz eine Wärmeleitfähigkeit < 0,04 W/mK, vorzugsweise ≤ 0,035 W/mK, besonders bevorzugt ≤ 0,030 W/mK, ganz besonders bevorzugt ≤ 0,025 W/mK, noch bevorzugter ≤ 0,020 W/mK, noch bevorzugter ≤ 0,019 W/mK, noch bevorzugter ≤ 0,018 W/mK, noch bevorzugter ≤ 0,017 W/mK, noch bevorzugter ≤ 0,016 W/mK, noch bevorzugter ≤ 0,015 W/mK aufweist.

6. Fugendichtungsband nach wenigstens einem der vorherigen Ansprüche, **dadurch gekennzeichnet, dass** die Substanz derart stabil ausgebildet ist, dass diese bei einem Komprimieren des Fugendichtungsbandes nicht komprimiert wird.

7. Fugendichtungsband nach wenigstens einem der vorherigen Ansprüche, **dadurch gekennzeichnet, dass** die Substanz derart dimensioniert ist, dass diese auf den Schaumstoff und/oder vorzugsweise in die Poren des Schaumstoffs des Fugendichtungsbandes bringbar ist.

8. Fugendichtungsband nach wenigstens einem der vorherigen Ansprüche, **dadurch gekennzeichnet, dass** die mittlere Partikelgröße d₅₀ der Substanz weniger als 500 µm, vorzugsweise weniger als 100 µm besonders bevorzugt zwischen 5 und 20 µm, ganz besonders bevorzugt weniger als 10 µm, noch bevorzugter weniger als 5 µm beträgt.

9. Fugendichtungsband nach wenigstens einem der vorherigen Ansprüche, **dadurch gekennzeichnet, dass** die Substanz in dem Schaumstoff homogen verteilt ist.

10. Fugendichtungsband nach wenigstens einem der vorherigen Ansprüche, **dadurch gekennzeichnet, dass** die Imprägniermasse die Substanz in einer Menge von 1 bis 5 Gew.-% i.Tr., vorzugsweise von 2 bis 3 Gew.-% i.Tr., jeweils bezogen auf 100 Gew.-% i.Tr. Imprägniermasse enthält.

## Claims

1. Joint sealing tape comprising a foam material, wherein the foam material is equipped with at least one substance which reduces the thermal conductivity of the foam material, **characterized in that** the foam material is impregnated with an impregnating compound, wherein the impregnating compound contains the substance in the form of particles, wherein the substance is an aerogel or fumed silica.

2. Joint sealing tape according to claim 1, **characterized in that** the foam is equipped with the substance in such a way that the thermal conductivity of the joint sealing tape in an uncompressed state is ≤ 0.040 W/mK, preferably 0.039 ≤ W/mK, particularly preferably ≤ 0.038 W/mK, very particularly preferably ≤ 0.037 W/mK, even more preferably ≤ 0.0366 W/mK.

3. Joint sealing tape according to at least one of the preceding claims, **characterized in that** the foam is equipped with the substance in such a way that the thermal conductivity of the joint sealing tape in a compressed state is ≤ 0.040 W/mK, preferably ≤ 0.039 W/mK, particularly preferably ≤ 0.038 W/mK, very particularly preferably ≤ 0.037 W/mK, even more preferably ≤ 0.0366 W/mK.

4. Joint sealing tape according to at least one of the preceding claims, **characterized in that** the foam is equipped with the at least one substance in such a way that the thermal conductivity of the joint sealing tape is lower in a compressed state than in an uncompressed state.

5. Joint sealing tape according to at least one of the preceding claims, **characterized in that** the substance has a thermal conductivity of < 0.04 W/mK, preferably ≤ 0.035 W/mK, particularly preferably ≤ 0.030 W/mK, very preferably ≤ 0.025 W/mK, even more preferably ≤ 0.020 W/mK, even more preferably ≤ 0.019 W/mK, even more preferably ≤ 0.018 W/mK, even more preferably ≤ 0.017 W/mK, even more preferably ≤ 0.016 W/mK, even more preferably ≤ 0.015 W/mK.

6. Joint sealing tape according to at least one of the preceding claims, **characterized in that** the substance is designed to be stable in such a way that it is not compressed when the joint sealing tape is compressed.

7. Joint sealing tape according to at least one of the preceding claims, **characterized in that** the substance is dimensioned in such a way that it can be applied to the foam and/or preferably into the pores of the foam of the joint sealing tape.

8. Joint sealing tape according to at least one of the preceding claims, **characterized in that** the average particle size d₅₀ of the substance is less than 500 µm, preferably less than 100 µm, particularly preferably between 5 and 20 µm, very particularly preferably less than 10 µm, even more preferably less than 5 µm.

9. Joint sealing tape according to at least one of the preceding claims, **characterized in that** the substance is homogeneously distributed in the foam.

10. Joint sealing tape according to at least one of the preceding claims, **characterized in that** the impregnating compound contains the substance in an amount of from 1 to 5% by weight in the dry matter, preferably from 2 to 3% by weight in the dry matter, in each case based on 100% by weight in the dry matter of the impregnating compound.

## Revendications

1. Bande d'étanchéité de joint comprenant une mousse, la mousse étant dotée d'au moins une substance qui réduit la conductivité thermique de la mousse, **caractérisée en ce que** la mousse est imprégnée d'une masse d'imprégnation, la masse d'imprégnation contenant la substance sous forme de particules, la substance étant un aérogel ou de la silice pyrogène.

2. Bande d'étanchéité de joint selon la revendication 1, **caractérisée en ce que** la mousse est dotée de la substance de telle sorte que la conductivité thermique de la bande d'étanchéité de joint dans un état non comprimé est ≤ 0,040 W/mK, de préférence ≤ 0,039 ≤ W/mK, de manière particulièrement préférée ≤ 0,038 W/mK, de manière tout particuli èrement préférée ≤ 0,037 W/mK, de manière encore plus préférée ≤ 0,0366 W/mK.

3. Bande d'étanchéité de joint selon au moins l'une des revendications précédentes, **caractérisée en ce que** la mousse est dotée de la substance de telle sorte que la conductivité thermique de la bande d'étanchéité de joint dans un état comprimé est ≤ 0,040 W/mK, de préférence ≤ 0,039 W/mK, de manière particulièrement préférée ≤ 0,038 W/mK, de manière tout particulièrement préférée ≤ 0,037 W/mK, de manière encore plus préférée ≤ 0,0366 W/mK.

4. Bande d'étanchéité de joint selon au moins l'une des revendications précédentes, **caractérisée en ce que** la mousse est dotée de l'au moins une substance de telle sorte que la conductivité thermique de la bande d'étanchéité de joint dans un état comprimé est inférieure à celle dans un état non comprimé.

5. Bande d'étanchéité de joint selon au moins l'une des revendications précédentes, **caractérisée en ce que** la substance présente une conductivité thermique < 0,04 W/mK, de préférence ≤ 0,035 W/mK, de manière particulièrement préférée ≤ 0,030 W/mK, de manière tout particulièrement préférée ≤ 0,025 W/mK, de manière encore plus préférée ≤ 0,020 W/mK, de manière encore plus préférée ≤ 0,019 W/mK, de manière encore plus préférée ≤ 0,018 W/mK, de manière encore plus préférée ≤ 0,017 W/mK, de manière encore plus préférée ≤ 0,016 W/mK, de manière encore plus préférée ≤ 0,015 W/mK.

6. Bande d'étanchéité de joint selon au moins l'une des revendications précédentes, **caractérisée en ce que** la substance est conçue de manière stable de telle sorte que celle-ci ne soit pas comprimée lors d'une compression de la bande d'étanchéité de joint.

7. Bande d'étanchéité de joint selon au moins l'une des revendications précédentes, **caractérisée en ce que** la substance est dimensionnée de telle sorte que celle-ci est amenable sur la mousse et/ou de préférence dans les pores de la mousse de la bande d'étanchéité de joint.

8. Bande d'étanchéité de joint selon au moins l'une des revendications précédentes, **caractérisée en ce que** la taille moyenne des particules d₅₀ de la substance est inférieure à 500 µm, de préférence inférieure à 100 µm, de manière particulièrement préférée entre 5 et 20 µm, de manière tout particulièrement préférée inférieure à 10 µm, de manière encore plus préférée inférieure à 5 µm.

9. Bande d'étanchéité de joint selon au moins l'une des revendications précédentes, **caractérisée en ce que** la substance est répartie de manière homogène dans la mousse.

10. Bande d'étanchéité de joint selon au moins l'une des revendications précédentes, **caractérisée en ce que** la masse d'imprégnation contient la substance en une quantité de 1 à 5 % en poids de matière sèche, de préférence de 2 à 3 % en poids de matière sèche, chaque fois rapportée à 100 % en poids de matière sèche de masse d'imprégnation.
